# EUROPEAN PATENT SPECIFICATION

(11) **EP 3 878 401 B1**
(45) Date of publication and mention of the grant of the patent: **02.07.2025**
(21) Application number: 19885762.5
(22) Date of filing: 11.11.2019
(51) Int. Cl.: A61C 15/04

(54) **FLOSS-TYPE TOOTH CLEANING DEVICE**
ZAHNSEIDENARTIGE ZAHNREINIGUNGSVORRICHTUNG
DISPOSITIF DE NETTOYAGE DENTAIRE DU TYPE FIL DENTAIRE

(30) Priority: 12.11.2018 CN 201821853742 U
(43) Date of publication of application: 15.09.2021
(73) Proprietor: Chang, Kuei-Fang, Kaohsiung City, Taiwan 807 (TW)
(72) Inventor: Chang, Kuei-Fang, Kaohsiung City, Taiwan 807 (TW)
(74) Representative: Straus, Alexander
(86) International application number: PCT/CN2019/117057
(87) International publication number: WO 2020/098592

(56) References cited:
- CN-A- 107 214 734
- CN-Y- 2 425 630
- CN-Y- 2 873 137
- DE-U1- 202005 009 354
- KR-A- 20150 016 027
- KR-A- 20150 066 681
- US-A- 3 746 017
- US-A- 5 085 236
- US-A1- 2006 260 636
- US-B1- 6 440 149
- US-B1- 6 440 149

## Description

### Field of the Invention

The disclosure relates to a floss-type tooth cleaning device, and more particularly, to a floss-type tooth cleaning device configured to mount and tighten a dental floss and capable of being recycling used by a user.

### Background of the Invention

In general, the method for cleaning teeth is using a toothbrush to clean the oral cavity and teeth after a meal, before going to bed, or after getting up. When at a fixed location, such as home or office, it is convenient to prepare a toothbrush. However, when going out, it is less convenient to carry a toothbrush. In addition, toothpicks and dental floss sticks are usually provided for guests to floss or clean interdental space after meals. However, the toothpicks and the dental floss sticks are disposable consumables. Especially in the case of the dental floss sticks, the main structure thereof is composed of a plastic stick body and a dental floss, the cost thereof is high and may cause environmental pollution due to disposable use.

Alternatively, the user may use a bare-wire dental floss to clean the teeth. When doing so, the user needs to wind the bare-wire dental floss around fingers thereof. Accordingly, the fingers may directly touch food residue or saliva, which is very inconvenient for the user. Accordingly, how to design a tooth cleaning device which combines the advantages of the bare-wire dental floss and the dental floss stick is a problem to be solved.

Therefore, some inventors have proposed various dental floss sticks which are recycling and environmentally friendly. For example, "Dental Floss Device" of TW I609677, "Dental Floss Tooth Cleaning Device" of CN 2569761Y, and "Hybrid dental flosser and toothbrush" of US6886570 B2 are provided. However, the aforementioned products have drawbacks of complicated structures, which enhance the manufacturing difficulty. Moreover, the complicated structures are particularly prone to bacteria adhesion and growth after use in oral cavity. If the user reuses the products without effective disinfection, it results in the risk of disease entering by the mouth.

Taking into account the above problems, the inventor of the present disclosure has conducted research and analysis on the use and the structure of dental floss sticks based on years of experience in the design of oral hygiene products, and hope to design a product which can meet the practical need. Accordingly, the main object of the present disclosure is to provide a floss-type tooth cleaning device which is easy to carry and implement, environmentally friendly, and easy to disinfect to meet the oral hygiene needs. US 3 746 017 A, KR 2015 0016027 A,and KR 2015 0066681 A disclose various floss-type tooth cleaning devices. US 5 085 236 A discloses a floss-type tooth cleaning device, characterized by being configured to clean an interdental space in an oral cavity after being wound with a bare-wire dental floss, the floss-type tooth cleaning device comprising:a grip portion;a bracket portion connected with the grip portion, the bracket portion being formed with a first floss groove, a second floss groove, and a tooth cleaning portion being hollow and formed between the first floss groove and the second floss groove ; and a floss positioning portion disposed on a plane of the bracket portion, the floss positioning portion being configured to allow an initial end and a final end of the bare-wire dental floss to be wound and fixed thereon, the floss positioning portion comprises a cylinder and a position limiting cap.

### Summary of the Invention

According to the present disclosure, a floss-type tooth cleaning device is provided to a user to clean an interdental space in an oral cavity thereof. The floss-type tooth cleaning device is easy to carry and implement. Moreover, with the use of a bare-wire dental floss, the floss-type tooth cleaning device can further meet the environmental protection demands. The floss-type tooth cleaning device can be made of a skin-friendly silicone, a rubber, or a nanomaterial that bacteria are not easy to adhere or grow thereon. The main structure of the floss-type tooth cleaning device includes a grip portion and a bracket portion extended from the grip portion. The bracket portion is formed with a tooth cleaning portion being hollow and configured to tighten the bare-wire dental floss, a floss groove configured to allow the bare-wire dental floss to pass through, and a floss positioning portion configured to fix and position the bare-wire dental floss. When implementing, an initial end of the bare-wire dental floss is simply wound around the floss positioning portion by the user to complete the initial positioning, and then the bare-wire dental floss is pulled along and passed through the floss groove, the bracket portion and rewound to the floss positioning portion to complete the final positioning, such that the bare-wire dental floss can be tightened and fixed on the bracket portion. The portion of the bare-wire dental floss exposed in the tooth cleaning portion can be applied to clean the interdental space. After use, the user can simply remove the bare-wire dental floss. The present disclosure is easy to implement and can meet the environmental protection requirements of recycling. Moreover, it is easy to clean due to the simple structure.

According to one embodiment of the present disclosure, a floss-type tooth cleaning device is provided. The floss-type tooth cleaning device is configured to clean an interdental space in an oral cavity after being wound with a bare-wire dental floss, and includes:
a grip portion;
a bracket portion extended from the grip portion, the bracket portion being formed with a first floss groove, a second floss groove, and a tooth cleaning portion being hollow and formed between the first floss groove and the second floss groove; and
a floss positioning portion formed on a plane of the bracket portion, the floss positioning portion being configured to allow an initial end and a final end of the bare-wire dental floss to be wound and fixed thereon.

Wherein, the floss positioning portion includes a cylinder and a position limiting cap, the cylinder protrudes from the plane of the bracket portion when the cylinder is assembled on the bracket portion, the position limiting cap is configured to be assembled on the cylinder, and a pressing surface of the position limiting cap presses against the plane of the bracket portion when the position limiting cap is assembled on the cylinder.

According to another embodiment of the present disclosure, a floss-type tooth cleaning device is provided. The floss-type tooth cleaning device is configured to clean an interdental space in an oral cavity after being wound with a bare-wire dental floss, and includes:
a first sheet formed with a grip portion and a bracket portion extended from the grip portion, the first sheet includes a cylinder protruding from a plane thereof;
a second sheet formed with a first through hole;
a third sheet formed with a second through hole, when assembling, the cylinder of the first sheet being inserted through second through hole of the third sheet and the first through hole of the second sheet, such that the first sheet, the third sheet and the second sheet are fixed and assembled with each other, and a floss groove formed around the third sheet being concaved between the first sheet and the second sheet and configured to allow the bare-wire dental floss to pass through; and
a position limiting cap assembled on the cylinder protruding from the first through hole of the second sheet and being configured to allow an initial end and a final end of the bare-wire dental floss to be wound and fixed thereon when the position limiting cap is assembled on the cylinder.

Wherein, the cylinder is formed independently from the first sheet, when assembling, the cylinder is inserted in the first sheet, the third sheet and the second sheet.

Wherein, a segment limiting groove is formed on the plane of the bracket portion, such that a segment of the bare-wire dental floss is pulled to pass through the segment limiting groove then to the first floss groove smoothly by the direction limitation provided by the segment limiting groove.

Wherein, a lower end of the grip portion is capable of being assembled in a placement hole of a holder so as to be fixed on a plane.

Wherein, an assembly portion formed on an exterior of the holder is configured to be assembled with an opposite assembly portion of a cover.

Wherein, the assembly portion and the opposite assembly portion are a pair of mutually engaged threads, buckles, snap points, or a combination thereof.

Wherein, the position limiting cap has elasticity and is made of a rubber or a silicone, the position limiting cap presses against the plane of the bracket portion when the position limiting cap is assembled on the bracket portion.

Wherein, the position limiting cap and the cylinder are integrally formed.

### Brief Description of the Drawings

FIG. 1 is a three-dimensional diagram according to the present disclosure.
FIG. 2 is a structure schematic diagram 1 according to the present disclosure.
FIG. 3 is a structure schematic diagram 2 according to the present disclosure.
FIG. 4 is a structure schematic diagram 3 according to the present disclosure.
FIG. 5 is a use schematic diagram 1 according to the present disclosure.

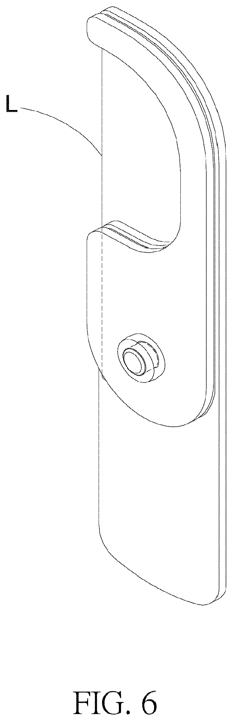

FIG. 6 is a use schematic diagram 2 according to the present disclosure.
FIG. 7 is a schematic diagram showing another preferred embodiment 1 according to the present disclosure.
FIG. 8 is a schematic diagram showing another preferred embodiment 2 according to the present disclosure.
FIG. 9 is a schematic diagram showing another preferred embodiment 3 according to the present disclosure.
FIG. 10 is a schematic diagram showing another preferred embodiment 4 according to the present disclosure.
FIG. 11 is a schematic diagram showing another preferred embodiment 5 according to the present disclosure.

**Reference Numerals**

| | | | |
|---|---|---|---|
| 1 | floss-type tooth cleaning device | | |
| 11 | grip portion | 12 | bracket portion |
| 121 | first floss groove | | |
| 122 | second floss groove | | |
| 123 | tooth cleaning portion | | |
| 124 | segment limiting groove | | |
| 13 | floss positioning portion | | |
| 131 | cylinder | | |
| 1321 | position limiting cap | | |
| 1321 | pressing surface | | |
| A | location | L | bare-wire dental floss |
| B | plane | L1 | initial end |
| L2 | segment | | |
| L3 | final end | | |
| 2 | floss-type tooth cleaning device | | |
| 21 | first sheet | 22 | second sheet |
| 211 | grip portion | 221 | through hole |
| 212 | bracket portion | | |
| 213 | cylinder | | |
| 23 | third sheet | 24 | position limiting cap |
| 231 | through hole | | |
| 3 | floss-type tooth cleaning device | | |
| 31 | bracket portion | 32 | floss positioning portion |
| 311 | assembling hole | 321 | cylinder |
| 322 | position limiting cap | | |
| 4 | holder | | |
| 41 | placement hole | | |
| 42 | assembly portion | | |
| 5 | cover | | |
| 51 | opposite assembly portion | | |

### Detailed Description

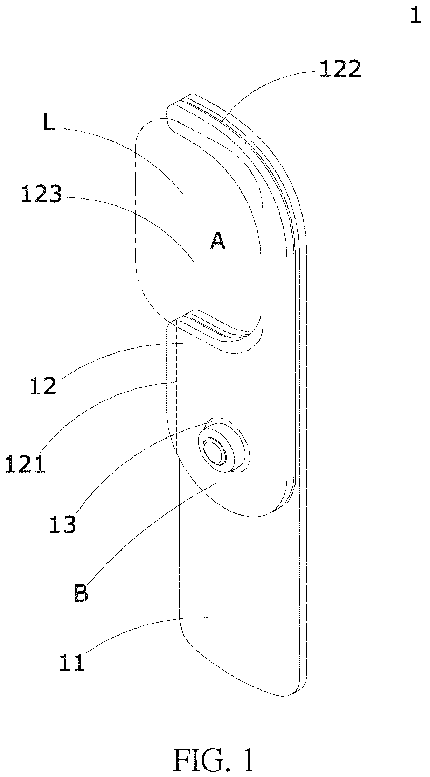

Please refer to FIG. 1, which is a three-dimensional diagram according to the present disclosure. As shown in FIG. 1, the floss-type tooth cleaning device 1 mainly includes a grip portion 11, a bracket portion 12 and a floss positioning portion 13. The grip portion 11 is configured to be gripped by a user. The bracket portion 12 is extended from the grip portion 11 and located above the grip portion 11. The bracket portion 12 is formed with a first floss groove 121, a second floss groove 122, and a tooth cleaning portion 123 formed between the first floss groove 121 and the second floss groove 122. As shown in FIG. 1, the tooth cleaning portion 123 (location A) is hollow relative to the body of the bracket portion 12 for allowing a bare-wire dental floss L to pass through and providing a tooth cleaning space. The floss positioning portion 13 is formed on a plane of the bracket portion 12, and is configured to allow the bare-wire dental floss L to be tightened and fixed when used.

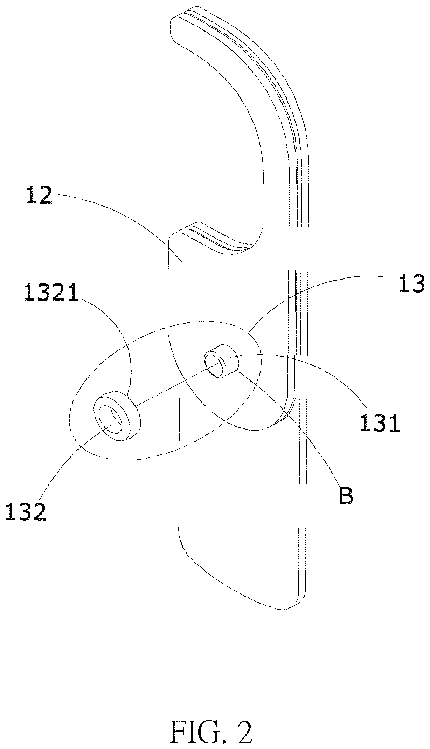

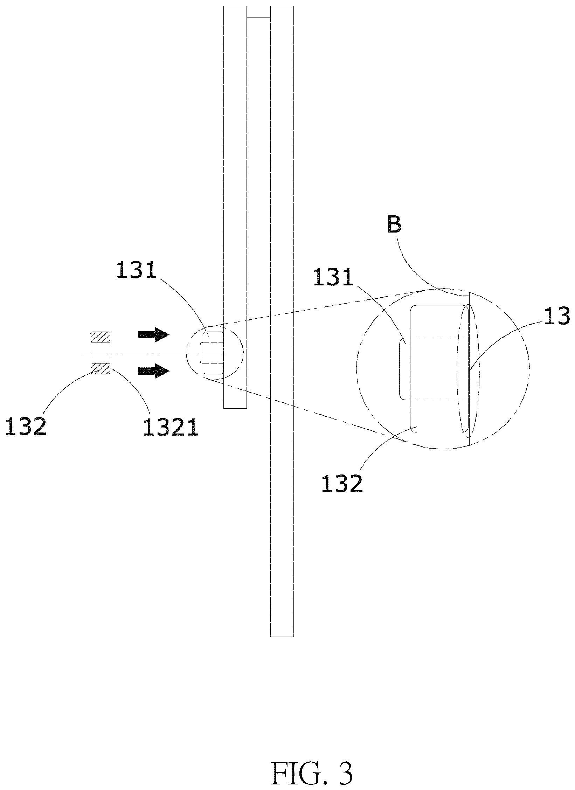

Please refer to FIG. 2, which is a structure schematic diagram 1 according to the present disclosure. As shown in FIG. 2, the floss positioning portion 13 mainly includes a cylinder 131 and a position limiting cap 132. The cylinder 131 can be assembled on the bracket portion 12 and protrudes from a plane B of the bracket portion 12. The position limiting cap 132 may have elasticity (or slight elasticity). The preferable material can exemplary be a rubber or a silicone. That is, the position limiting cap 132 can be made of the rubber or the silicone. The position limiting cap 132 is configured to be assembled on the cylinder 131, and a pressing surface 1321 of the position limiting cap 132 presses against the plane B of the bracket portion 12 when the position limiting cap 132 is assembled on the cylinder 131. Please refer to FIG. 3, which is a structure schematic diagram 2 according to the present disclosure. As shown in FIG. 3, when the position limiting cap 132 is assembled on the cylinder 131, the pressing surface 1321 of the position limiting cap 132 presses against the plane B of the bracket portion 12 so as to formed the floss positioning portion 13 therebetween.

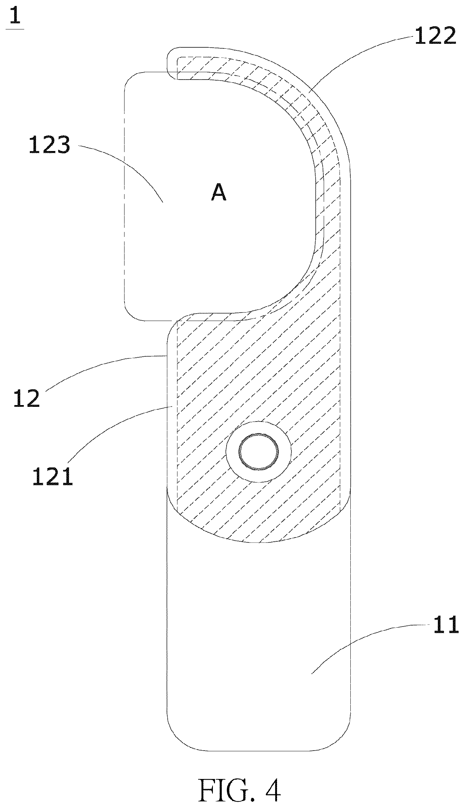

Please refer to FIG. 4, which is a structure schematic diagram 3 according to the present disclosure. FIG. 4 is a front perspective view of the present disclosure. As shown in FIG. 4, in the floss-type tooth cleaning device 1, the bracket portion 12 is formed with the first floss groove 121, the tooth cleaning portion 123 (location A) being hollow and the second floss groove 122.

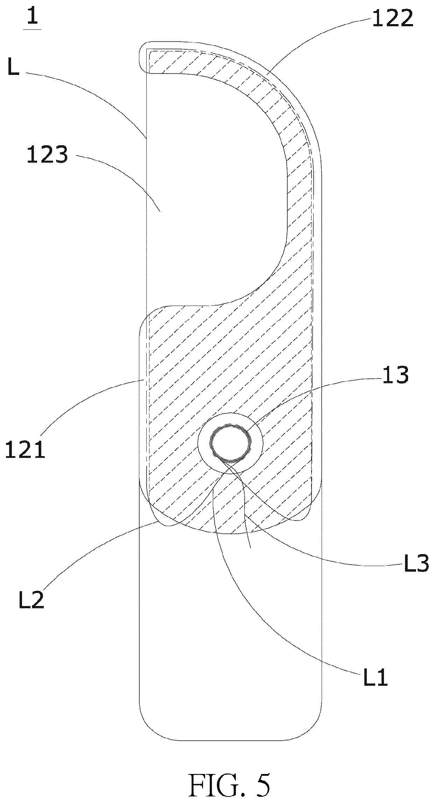

Please refer to FIG. 5, which is a use schematic diagram 1 according to the present disclosure. As shown in FIG. 5, when the user desires to use the floss-type tooth cleaning device 1, the steps are as follows:
First Step: the bare-wire dental floss L is pulled a predetermined length, and an initial end L1 thereof is wound around the floss positioning portion 13 one turn or more turns, then the initial end L1 is fixed and positioned on the floss positioning portion 13, such that the unilateral fixation is completed;
Second Step: the segment L2 of the bare-wire dental floss L is pulled toward the first floss groove 121, and then is pulled along the first floss groove 121 and passed through the tooth cleaning portion 123 and the second floss groove 122 till the bare-wire dental floss L is brought back to the floss positioning portion 13;
Third Step: the segment L2 of the bare-wire dental floss L is cut so as to form a final end L3. The final end L3 is pulled tightly so as to allow the bare-wire dental floss L to be tightened in the tooth cleaning portion 123. Then the final end L3 is wound around the floss positioning portion 13 one turn or more turns, such that the fixation of the bare-wire dental floss L is completed.

The aforementioned Third Step can be replaced by the following step:
The segment L2 is abutted toward the floss positioning portion 13 and pulled tightly so as to allow the bare-wire dental floss L to be tightened in the tooth cleaning portion 123. Then the segment L2 is wound around the floss positioning portion 13 one turn or more turns, such that the fixation of the bare-wire dental floss L is completed.

Please refer to FIG. 5, which is a use schematic diagram 2 according to the present disclosure. When the bare-wire dental floss L is wound and fixed, the entire bare-wire dental floss L is effectively tightened, and a usable tooth cleaning device is obtained.

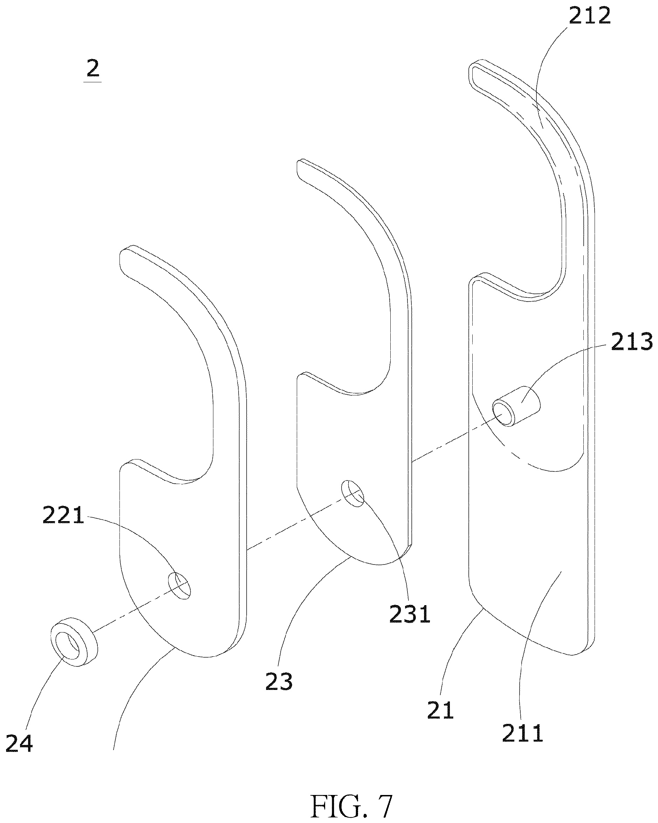

Please refer to FIG. 7, which is a schematic diagram showing another preferred embodiment 1 according to the present disclosure. The floss-type tooth cleaning device can be composed of a plurality of units. As shown in FIG. 7, the floss-type tooth cleaning device 2 mainly includes a first sheet 21, a second sheet 22 and a third sheet 23. The first sheet 21 is formed with a grip portion 211 and a bracket portion 212 extended from the grip portion 211. A cylinder 213 protrudes from a plane of the first sheet 21. The second sheet 22 has a shape and a size identical to that of the bracket portion 212 of first sheet 21 and is formed with a first through hole 221. The third sheet 23 has a shape identical to that of the bracket portion 212 of first sheet 21 and a size slightly smaller than that of the bracket portion 212 of first sheet 21. The third sheet 23 is formed with a second through hole 231. When assembling, the cylinder 213 of the first sheet 21 is inserted through the second through hole 231 of the third sheet 23 and the first through hole 221 of the second sheet 22, such that the first sheet 21, the third sheet 23 and the second sheet 22 are fixed and assembled with each other, and the assembly of the floss-type tooth cleaning device 2 is completed. With the third sheet 23 has a smaller size, a floss groove is formed around the third sheet 23 and is concaved between the first sheet 21 and the second sheet 22 to allow a bare-wire dental floss to pass through. At last, the position limiting cap 24 is assembled on the cylinder 213 protruding from the first through hole 221 of the second sheet 22, such that the floss-type tooth cleaning device can be used in cooperated with the bare-wire dental floss. The cylinder 213 protruding from the plane of the first sheet 21 can be formed independently from the first sheet 21. When assembling, the cylinder 213 can be directly inserted in the first sheet 21, the second sheet 22 and the third sheet 23, such that the three sheets can be fixed and assembled with each other.

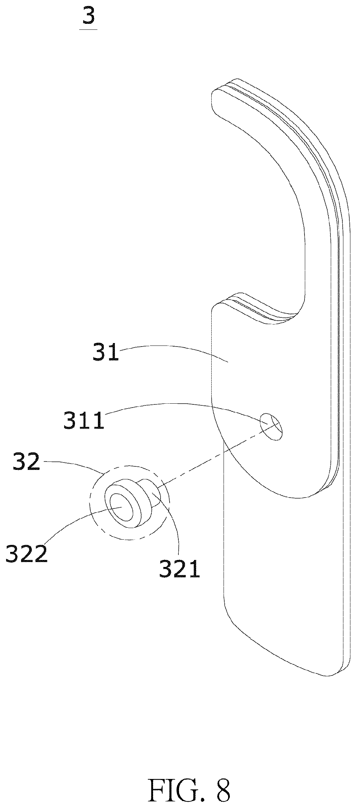

Please refer to FIG. 8, which is a schematic diagram showing another preferred embodiment 2 according to the present disclosure. According to FIG. 8, the floss-type tooth cleaning device 3 which can be formed integrally or composed of a plurality of sheets. The floss-type tooth cleaning device 3 has a bracket portion 31 formed with an assembling hole 311 on a plane thereof. The assembling hole 311 can be incorporated with a floss positioning portion 32. The floss positioning portion 32 includes a cylinder 321 and a position limiting cap 322. In use, the cylinder 321 of the floss positioning portion 32 is assembled in the assembling hole 311 first, and then a force is applied to press the position limiting cap 322 to abut against the plane of the bracket portion 31 so as to complete the assembly. How to use the floss positioning portion 32 with the corporation of the bare-wire dental floss has been mentioned above and is omitted herein.

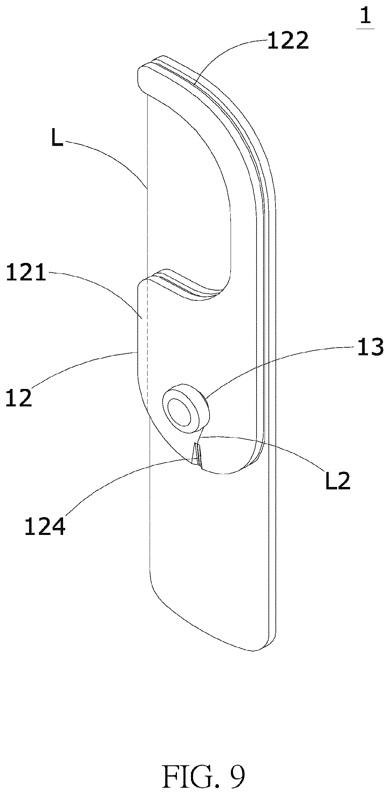

Please refer to FIG. 9, which is a schematic diagram showing another preferred embodiment 3 according to the present disclosure. As shown in FIG. 9, the floss-type tooth cleaning device 1 (or the floss-type tooth cleaning device 2, the floss-type tooth cleaning device 3) can have a segment limiting groove 124 formed on the plane of the bracket portion 12 adjacent to the floss groove (the first floss groove 121 or the second floss groove 122). As such, when the segment L2 of the bare-wire dental floss L is pulled from the floss positioning portion 13, the segment L2 of the bare-wire dental floss L can be pulled to pass through the segment limiting groove 124 then to the first floss groove 121 smoothly by the direction limitation provided by the segment limiting groove 124.

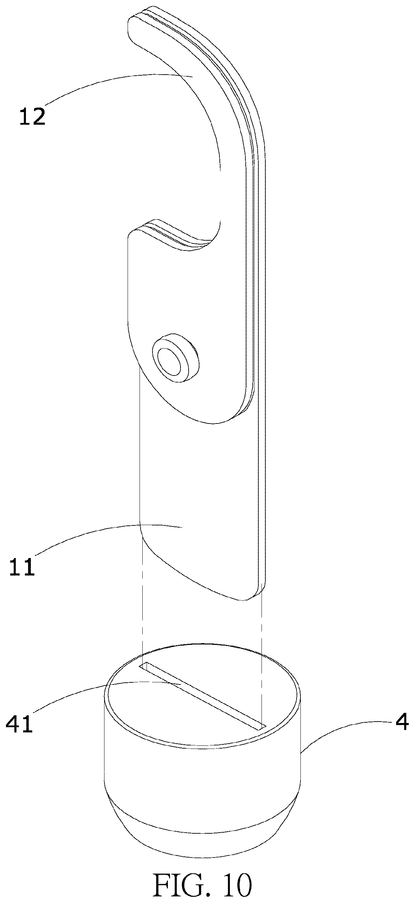

Please refer to FIG. 10, which is a schematic diagram showing another preferred embodiment 4 according to the present disclosure. As shown in FIG. 10, a holder 4 formed with a placement hole 41 in an upper portion thereof is provided. The user can insert the grip portion 11 of the floss-type tooth cleaning device 1 into the placement hole 41 of holder 4. As such, the floss-type tooth cleaning device 1 can be placed upright when the floss-type tooth cleaning device 1 is unused, which can prevent the bracket portion 12 from lying on a plane to contact with dirties.

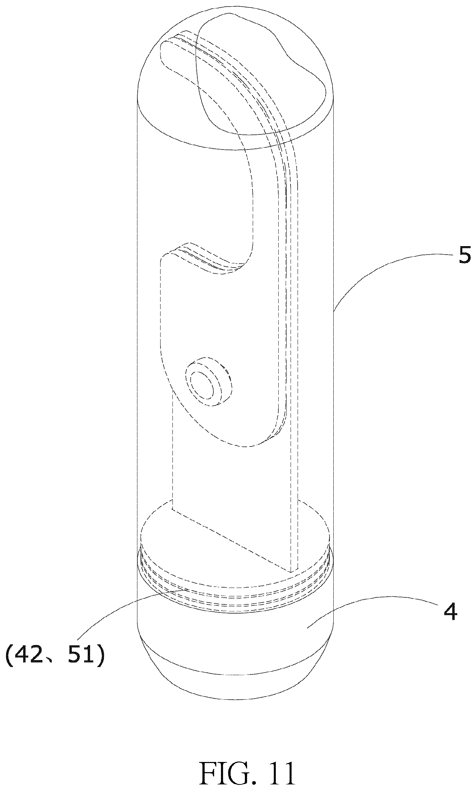

Please refer to FIG. 11, which is a schematic diagram showing another preferred embodiment 5 according to the present disclosure. The aforementioned holder 4 can be further formed with an assembly portion 42 on an exterior thereof. The assembly portion 42 is configured to be assembled with an opposite assembly portion 51 of a cover 5. Therefore, when the floss-type tooth cleaning device 1 is covered, the floss-type tooth cleaning device 1 can be completely accommodated and carried easily. The assembly portion 42 of the holder 4 and the opposite assembly portion 51 of the cover 5 can be, but are not limited to, a pair of mutually engaged threads, buckles or snap points, etc.

Based on the foregoing, the present disclosure has advantages of simple structure, easy cleaning, easy use, easy operation, and meeting the environmental protection demands. Accordingly, when the present disclosure is implemented, the object of providing a floss-type tooth cleaning device which is easy to carry and use, environmentally friendly, easy to disinfect to meet the oral hygiene needs can be achieved.

Although the present disclosure has been described in considerable detail with reference to certain embodiments thereof, other embodiments are possible.

In view of the foregoing, it is intended that the present disclosure covers modifications and variations of this disclosure provided they fall within the scope of the following claims.

## Claims

1. A floss-type tooth cleaning device (1, 2, 3), configured to clean an interdental space in an oral cavity after being wound with a bare-wire dental floss (L), the floss-type tooth cleaning device (1, 2, 3) comprising:
a grip portion (11, 211);
a bracket portion (12, 212, 31)connected with the grip portion (11, 211), the bracket portion (12, 212, 31) being formed with a first floss groove (121), a second floss groove (122), and a tooth cleaning portion (123) being hollow and formed between the first floss groove (121) and the second floss groove (122) ; and
a floss positioning portion (13, 32) disposed on a plane (B) of the bracket portion (12, 212, 31), the floss positioning portion (13, 32) being configured to allow an initial end (L1) and a final end (L3) of the bare-wire dental floss (L) to be wound and fixed thereon, the floss positioning portion (13, 32) comprises a cylinder (131, 213, 321) and a position limiting cap (132, 24, 322); **characterised in that** the floss-type tooth cleaning device further comprises
a first sheet (21), a lower portion of the first sheet (21) being the grip portion (211);
a second sheet (22) formed with a first through hole (221);
a third sheet (23) formed with a second through hole (231);
wherein an upper portion opposite to the lower portion of the first sheet (21), the second sheet (22) and the third sheet (23) together form the bracket portion (212, 31), when assembling, the cylinder (213, 321) is inserted through the second through hole (231) of the third sheet (23) and the first through hole (221) of the second sheet (22), such that the first sheet (21), the third sheet (23) and the second sheet (22) are fixed and assembled with each other;
wherein a size of the third sheet (23) is smaller than that of the first sheet (21) and the second sheet (22), such that a floss groove is formed around the third sheet (23) and concaved between the first sheet (21) and the second sheet (22), the floss groove comprises the first floss groove (121) and the second floss groove (122) and is for allowing the bare-wire dental floss (L) to pass through.

2. The floss-type tooth cleaning device (2, 3) of claim 1, **characterized in that** the cylinder (213, 321) is formed independently from the first sheet (21), when assembling, the cylinder (213, 321) is inserted through the first sheet (21), the third sheet (23) and the second sheet (22).

3. The floss-type tooth cleaning device (1, 2, 3) of any of claims 1-2, **characterized in that** a segment limiting groove (124) is formed on the plane (B) of the bracket portion (12, 212, 31), such that a segment of the bare-wire dental floss (L) is pulled to pass through the segment limiting groove (124) then to the first floss groove (121) smoothly by the direction limitation provided by the segment limiting groove (124).

4. The floss-type tooth cleaning device (1, 2, 3) of any of claims 1-3, **characterized by** a holder (4), wherein a lower end of the grip portion (11, 211) is capable of being assembled in a placement hole (41) of the holder (4).

5. The floss-type tooth cleaning device (1, 2, 3) of claim 4, **characterized by** a cover (5), wherein an assembly portion (42) formed on an exterior of the holder (4) is configured to be assembled with an opposite assembly portion (51) of the cover (5) .

6. The floss-type tooth cleaning device (1, 2, 3) of claim 5, **characterized in that** the assembly portion (42) and the opposite assembly portion (51) are a pair of mutually engaged threads, buckles, snap points, or a combination thereof.

7. The floss-type tooth cleaning device (1, 2, 3) of any of claims 1-6, **characterized in that** the position limiting cap (132, 24, 322) has elasticity and is made of a rubber or a silicone, the position limiting cap (132, 24, 322) presses against the plane (B) of the bracket portion (12, 212, 31) when the position limiting cap (132, 24, 322) is assembled on the bracket portion (12, 212, 31).

8. The floss-type tooth cleaning device (2) of claim 1, **characterized in that** the cylinder (213) protrudes from a plane (B) of the first sheet (21), after the cylinder (213) of the first sheet (21) is inserted through the second through hole (231) of the third sheet (23) and the first through hole (221) of the second sheet (22), the position limiting cap (24) is assembled on the cylinder (213) protruding from the first through hole (221) of the second sheet (22).

9. The floss-type tooth cleaning device (1, 2) of any of claims 1-8, **characterized in that** the cylinder (131, 213) protrudes from the plane (B) of the bracket portion (12, 212) when the cylinder (131, 213) is assembled on the bracket portion (12, 212), the position limiting cap (132, 24) is configured to be assembled on the cylinder (131, 213), and a pressing surface (1321) of the position limiting cap (132, 24) presses against the plane (B) of the bracket portion (12, 212) when the position limiting cap (132, 24) is assembled on the cylinder (131, 213).

10. The floss-type tooth cleaning device (1, 2, 3) of any of claims 1-7, **characterized in that** the position limiting cap (322) and the cylinder (321) are integrally formed.

## Patentansprüche

1. Zahnseide-Zahnreinigungsvorrichtung (1, 2, 3), die ausgestaltet ist, einen Interdentalraum in einer Mundhöhle zu reinigen, nachdem sie mit einer Zahnseide (L) aus purem Band bewickelt wurde, worin die Zahnseide-Zahnreinigungsvorrichtung (1, 2, 3) umfasst:
einen Griffabschnitt (11, 211);
einen Bügelabschnitt (12, 212, 31), der mit dem Griffabschnitt (11, 211) verbunden ist, worin der Bügelabschnitt (12, 212, 31) mit einer ersten Zahnseidenrille (121), einer zweiten Zahnseidenrille (122) und einem Zahnreinigungsabschnitt (123) ausgebildet ist, der hohl ist und zwischen der ersten Zahnseidenrille (121) und der zweiten Zahnseidenrille (122) ausgebildet ist; und
einen Zahnseiden-Positionierungsabschnitt (13, 32), der auf einer Ebene (B) des Bügelabschnitts (12, 212, 31) angeordnet ist, worin der Zahnseiden-Positionierungsabschnitt (13, 32) ausgestaltet ist, es zu ermöglichen, ein Anfangsende (L1) und ein Endende (L3) der Zahnseide (L) mit purem Band zu bewickeln und dieses daran zu befestigen, worin der Zahnseiden-Positionierungsabschnitt (13, 32) einen Zylinder (131, 213, 321) und eine Positionsbegrenzungskappe (132, 24, 322) umfasst; **dadurch gekennzeichnet, dass** die Zahnseide-Zahnreinigungsvorrichtung
ein erstes Blatt (21) umfasst, worin ein unterer Abschnitt des ersten Blattes (21) der Griffabschnitt (211) ist;
ein zweites Blatt (22), das mit einem ersten Durchgangsloch (221) versehen ist;
ein drittes Blatt (23), das mit einem zweiten Durchgangsloch (231) versehen ist;
worin ein oberer Abschnitt, der dem unteren Abschnitt des ersten Blattes (21) gegenüberliegt, das zweite Blatt (22) und das dritte Blatt (23) zusammen den Bügelabschnitt (212, 31) ausbilden, worin beim Zusammenbau der Zylinder (213, 321) durch das zweite Durchgangsloch (231) des dritten Blattes (23) und das erste Durchgangsloch (221) des zweiten Blattes (22) eingeführt wird, so dass das erste Blatt (21), das dritte Blatt (23) und das zweite Blatt (22) fixiert und miteinander verbunden werden;
worin eine Größe des dritten Blattes (23) kleiner ist als die des ersten Blattes (21) und des zweiten Blattes (22), so dass eine Zahnseidenrille um das dritte Blatt (23) herum gebildet wird und zwischen dem ersten Blatt (21) und dem zweiten Blatt (22) konkav ist, worin die Zahnseidenrille die erste Zahnseidenrille (121) und die zweite Zahnseidenrille (122) umfasst und dazu dient, dass die Zahnseide (L) aus purem Band hindurchgehen kann.

2. Zahnseide-Zahnreinigungsvorrichtung (2, 3) nach Anspruch 1, **dadurch gekennzeichnet, dass** der Zylinder (213, 321) unabhängig von dem ersten Blatt (21) ausgebildet ist, worin beim Zusammenbau der Zylinder (213, 321) durch das erste Blatt (21), das dritte Blatt (23) und das zweite Blatt (22) hindurchgeführt wird.

3. Zahnseide-Zahnreinigungsvorrichtung (1, 2, 3) nach einem der Ansprüche 1 bis 2, **dadurch gekennzeichnet, dass** eine Segmentbegrenzungsrille (124) in der Ebene (B) des Bügelabschnitts (12, 212, 31) ausgebildet ist, so dass ein Segment der drahtlosen Zahnseide (L) so gezogen wird, dass es durch die Segmentbegrenzungsrille (124) und dann reibungslos durch die von der Segmentbegrenzungsrille (124) bereitgestellte Richtungsbegrenzung zur ersten Zahnseidenrille (121) gelangt.

4. Zahnseide-Zahnreinigungsvorrichtung (1, 2, 3) nach einem der Ansprüche 1 bis 3, **gekennzeichnet durch** einen Halter (4), worin ein unteres Ende des Griffabschnitts (11, 211) in ein Einsetzloch (41) des Halters (4) eingesetzt werden kann.

5. Zahnseide-Zahnreinigungsvorrichtung (1, 2, 3) nach Anspruch 4, **gekennzeichnet durch** eine Abdeckung (5), worin ein an einer Außenseite des Halters (4) ausgebildeter Verbindungsabschnitt (42) ausgestaltet ist, dass er mit einem gegenüberliegenden Verbindungsabschnitt (51) der Abdeckung (5) zusammengefügt werden kann.

6. Zahnseide-Zahnreinigungsvorrichtung (1, 2, 3) nach Anspruch 5, **dadurch gekennzeichnet, dass** der Verbindungsabschnitt (42) und der gegenüberliegende Verbindungsabschnitt (51) ein Paar von ineinandergreifenden Gewinden, Schnallen, Schnapppunkten oder einer Kombination davon sind.

7. Zahnseide-Zahnreinigungsvorrichtung (1, 2, 3) nach einem der Ansprüche 1 bis 6, **dadurch gekennzeichnet, dass** die Positionsbegrenzungskappe (132, 24, 322) elastisch ist und aus einem Gummi oder Silikon besteht, worin die Positionsbegrenzungskappe (132, 24, 322) gegen die Ebene (B) des Bügelabschnitts (12, 212, 31) drückt, wenn die Positionsbegrenzungskappe (132, 24, 322) auf dem Bügelabschnitt (12, 212, 31) montiert ist.

8. Zahnseide-Zahnreinigungsvorrichtung (2) nach Anspruch 1, **dadurch gekennzeichnet, dass** der Zylinder (213) aus einer Ebene (B) des ersten Blattes (21) herausragt, nachdem der Zylinder (213) des ersten Blattes (21) durch das zweite Durchgangsloch (231) des dritten Blattes (23) und das erste Durchgangsloch (221) des zweiten Blattes (22) eingeführt ist, die Positionsbegrenzungskappe (24) auf dem Zylinder (213) montiert ist, der aus dem ersten Durchgangsloch (221) des zweiten Blattes (22) herausragt.

9. Zahnseide-Zahnreinigungsvorrichtung (1, 2) nach einem der Ansprüche 1-8, **dadurch gekennzeichnet, dass** der Zylinder (131, 213) aus der Ebene (B) des Bügelabschnitts (12, 212) herausragt, wenn der Zylinder (131, 213) auf dem Bügelabschnitt (12, 212) montiert ist, die Positionsbegrenzungskappe (132, 24) ausgestaltet ist, auf dem Zylinder (131, 213) montiert zu werden, und eine Druckfläche (1321) der Positionsbegrenzungskappe (132, 24) gegen die Ebene (B) des Bügelabschnitts (12, 212) drückt, wenn die Positionsbegrenzungskappe (132, 24) auf dem Zylinder (131, 213) montiert ist.

10. Zahnseide-Zahnreinigungsvorrichtung (1, 2, 3) nach einem der Ansprüche 1 bis 7, **dadurch gekennzeichnet, dass** die Positionsbegrenzungskappe (322) und der Zylinder (321) einstückig ausgebildet sind.

## Revendications

1. Dispositif de nettoyage de dents de type fil dentaire (1, 2, 3), configuré pour nettoyer un espace interdentaire dans une cavité buccale après avoir été enroulé avec un fil dentaire nu (L), le dispositif de nettoyage de dents de type fil dentaire (1, 2, 3) comprenant:
une partie de préhension (11, 211);
une partie de support (12, 212, 31) reliée à la partie de préhension (11, 211), la partie de support (12, 212, 31) étant formée d'une première rainure de fil dentaire (121), d'une deuxième rainure de fil dentaire (122) et d'une partie de nettoyage de dents (123) creuse et formée entre la première rainure de fil dentaire (121) et la deuxième rainure de fil dentaire (122); et
une partie de positionnement du fil dentaire (13, 32) disposée sur un plan (B) de la partie de support (12, 212, 31), la partie de positionnement du fil dentaire (13, 32) étant configurée pour permettre à une extrémité initiale (L1) et à une extrémité finale (L3) du fil dentaire nu (L) d'être enroulées et fixées dessus, la partie de positionnement du fil dentaire (13, 32) comprend un cylindre (131, 213, 321) et un capuchon de limitation de position (132, 24, 322); **caractérisé en ce que** le dispositif de nettoyage de type fil dentaire comprend en outre
une première feuille (21), une partie inférieure de la première feuille (21) étant la partie de préhension (211);
une deuxième feuille (22) formée d'un premier trou de passage (221);
une troisième feuille (23) formée d'un deuxième trou de passage (231);
dans lequel une partie supérieure opposée à la partie inférieure de la première feuille (21), de la deuxième feuille (22) et de la troisième feuille (23) forment ensemble la partie de support (212, 31), lors de l'assemblage, le cylindre (213, 321) est inséré à travers le deuxième trou de passage (231) de la troisième feuille (23) et le premier trou de passage (221) de la deuxième feuille (22), de sorte que la première feuille (21), la troisième feuille (23) et la deuxième feuille (22) sont fixées et assemblées l'une à l'autre;
dans lequel une taille de la troisième feuille (23) est plus petite que celle de la première feuille (21) et de la deuxième feuille (22), de sorte qu'une rainure de fil dentaire est formée autour de la troisième feuille (23) et concavée entre la première feuille (21) et la deuxième feuille (22), la rainure de fil dentaire comprend la première rainure de fil dentaire (121) et la deuxième rainure de fil dentaire (122) et est destinée à permettre le passage du fil dentaire nu (L).

2. Dispositif de nettoyage de dents de type fil (2, 3) du type à fil dentaire de la revendication 1, **caractérisé en ce que** le cylindre (213, 321) est formé indépendamment de la première feuille (21), lors de l'assemblage, le cylindre (213, 321) est inséré à travers la première feuille (21), la troisième feuille (23) et la deuxième feuille (22).

3. Dispositif de nettoyage de dents de type fil (1, 2, 3) de l'une des revendications 1-2, **caractérisé en ce qu'**une rainure de limitation de segment (124) est formée sur le plan (B) de la partie de support (12, 212, 31), de sorte qu'un segment du fil dentaire nu (L) est tiré pour passer à travers la rainure de limitation de segment (124) puis vers la première rainure de fil (121) en douceur par la limitation de direction fournie par la rainure de limitation de segment (124).

4. Dispositif de nettoyage de dents de type fil (1, 2, 3) de l'une des revendications 1-3, **caractérisé par** un support (4), dans lequel une extrémité inférieure de la partie de préhension (11, 211) peut être assemblée dans un trou de placement (41) du support (4).

5. Dispositif de nettoyage de dents de type fil (1, 2, 3) de la revendication 4, **caractérisé par** un couvercle (5), dans lequel une partie d'assemblage (42) formée sur un extérieur du support (4) est configurée pour être assemblée avec une partie d'assemblage opposée (51) du couvercle (5).

6. Dispositif de nettoyage de dents de type fil (1, 2, 3) de la revendication 5, **caractérisé en ce que** la partie d'assemblage (42) et la partie d'assemblage opposée (51) sont une paire de filets, de boucles, de points d'encliquetage, ou une combinaison de ceux-ci, mutuellement engagés.

7. Dispositif de nettoyage de dents de type fil (1, 2, 3) de l'une des revendications 1-6, **caractérisé en ce que** le capuchon de limitation de position (132, 24, 322) est élastique et fait de caoutchouc ou de silicone, le capuchon de limitation de position (132, 24, 322) appuie contre le plan (B) de la partie de support (12, 212, 31) lorsque le capuchon de limitation de position (132, 24, 322) est assemblé sur la partie de support (12, 212, 31).

8. Dispositif de nettoyage de dents de type fil (2) de la revendication 1, **caractérisé en ce que** le cylindre (213) dépasse d'un plan (B) de la première feuille (21), après que le cylindre (213) de la première feuille (21) est inséré à travers le deuxième trou de passage (231) de la troisième feuille (23) et le premier trou de passage (221) de la deuxième feuille (22), le capuchon de limitation de position (24) est assemblé sur le cylindre (213) dépassant du premier trou de passage (221) de la deuxième feuille (22).

9. Dispositif de nettoyage de dents de type fil (1, 2) de l'une des revendications 1-8, **caractérisé en ce que** le cylindre (131, 213) fait saillie du plan (B) de la partie de support (12, 212) lorsque le cylindre (131, 213) est assemblé sur la partie de support (12, 212), le capuchon de limitation de position (132, 24) est configuré pour être assemblé sur le cylindre (131, 213), et une surface de pression (1321) du capuchon de limitation de position (132, 24) fait pression contre le plan (B) de la partie de support (12, 212) lorsque le capuchon de limitation de position (132, 24) est assemblé sur le cylindre (131, 213).

10. Dispositif de nettoyage de dents de type fil (1, 2, 3) de l'une des revendications 1-7, **caractérisé en ce que** le capuchon de limitation de position (322) et le cylindre (321) sont formés d'une seule pièce.
